# EUROPEAN PATENT SPECIFICATION

(11) **EP 1 601 605 B1**
(45) Date of publication and mention of the grant of the patent: **16.08.2006**
(21) Application number: 04703218.0
(22) Date of filing: 19.01.2004
(51) Int. Cl.: B66F 9/075, B60G 17/015, B66F 17/00

(54) **IMPROVEMENTS IN OR RELATING TO FORK LIFT TRUCKS**
VERBESSERUNGEN FÜR GABELSTAPLER ODER DIESE BETREFFEND
AMELIORATIONS APPORTEES A DES CHARIOTS ELEVATEURS A FOURCHE

(30) Priority: 04.02.2003 GB 0302496
(43) Date of publication of application: 07.12.2005
(73) Proprietor: Beckett, James Leonard, Buckinghamshire HP14 4RL (GB)
(72) Inventor: Beckett, James Leonard, Buckinghamshire HP14 4RL (GB)
(74) Representative: Downing, Michael Philip
(86) International application number: PCT/GB2004/000203
(87) International publication number: WO 2004/069730

(56) References cited:
- EP-A- 0 662 446
- WO-A-99/07595
- WO-A-99/31962
- US-A- 3 937 339
- US-B1- 6 467 776
- PATENT ABSTRACTS OF JAPAN vol. 1998, no. 04, 31 March 1998 (1998-03-31) & JP 09 315127 A (TOYO UMPANKI CO LTD), 9 December 1997 (1997-12-09)

## Description

### FIELD OF THE INVENTION

The present invention relates to the field of fork lift trucks or fork trucks. In particular, the present invention relates to an active levelling system for a fork lift truck that allows the verticality of the mast to be controlled notwithstanding undulations in the surface over which the truck is travelling.

### BACKGROUND ART

Fork lift trucks are commonly used in warehouses to transport loads from one location to another. These loads are commonly stored in high rise racking installations, and in high density situations, locations are formed by racking installations that are spaced closely together in order to maximise storage space and can rise to heights of 15 metres and over. Fork trucks are used to access locations within the racking and have extending masts to reach upper heights, for deposit and removal of goods and equipment that are commonly stored on pallets. In many instances the truck operator travels with the forks of the truck to the various height locations to facilitate picking.

In such warehouse environments there is a demand for the fork truck to be maintained so that its mast is stabilised in a vertical situation between the uprights of the racking. The gap between the fork truck and the racking is limited to typically 100mm, and previously it was therefore critical that the floor supporting the fork truck was installed with a high degree of flatness and levelness so that sway of the mast of the fork truck was minimised in order to maintain it within the uprights of the racking. It will be appreciated that the mast of a truck operating 100mm from racking that is 15m high must be kept within fractions of a degree from the upright. In general, as the mast is raised to the upper levels of the racking, so the demands of verticality are increased.

In a high density racking installation fork trucks are captive within the trucking aisles of the racking and are said to travel in the same defined paths selecting storage locations along their routes. The defined paths represent set positions for the wheels of the fork truck and the truck always travels in the same path. In prior systems, it was the regularity of the surface of the defined paths that controlled vertically stability of the mast of the fork truck as it is operated in each trucking aisle.

The safety and efficiency of materials handling operations were previously limited by the flatness and levelness of the floor surface, as fork trucks did not have any suspension or means to smooth out the irregularity of the surface. Indeed, the provision of known suspension systems for the truck will allow it to lean in response to loads and hence worsen the problem. Irregularities in the surface will force existing trucks to lean towards the racking, and in many instances the speed of trucks has to be limited so as to minimise the dynamic effect of operating on an irregular surface. Some truck designs simply cannot operate at all for fear of collision with the racking.

The demands currently placed on the construction industry are for floors to be finished to degrees of flatness and levelness that are extremely difficult to achieve. In many instances this can only be achieved by grinding the surface after it has been constructed, a practice that is both time consuming and expensive.

Also known are systems for levelling and stabilising fork trucks in the transverse direction.

US 3 937 339 discloses a fork lift truck for moving a load, comprising a load bearing member for carrying the load, wherein the truck comprises means for adjusting the vertical axis of the load bearing member to maintain it substantially parallel to the axis of gravitiational pull on the load, by controlling the tilt of the fork truck between the wheel track when the truck travels along a surface having varying degrees of flatness or deviance from horizontal.

### SUMMARY OF THE INVENTION

It is an aim of the present invention to overcome the disadvantages of the prior art systems, by providing a relatively simple and inexpensive system that can cope dynamically within a moving scenario.

Thus, the present invention provides a fork lift truck according to claim 1.

This invention provides for a system that maintains the levelness of the fork truck and thus stabilises the verticality of its mast as the truck actively operates at varying speeds encountering and reacting to dynamic influences during the process of locating storage positions in high-rise, narrow aisle racking installations.

The fork lift truck is provided with means for maintaining the vertical alignment of the mast of a fork truck whilst travelling on undulating and irregular surfaces, which compensates for the irregularity of the floor and associated dynamic forces, by typically adjusting the ride height of one or more wheels automatically, so as to control the tilt of the fork truck between the wheel track and the elevational difference between the front and rear axle.

Preferably, the fork truck is fitted with an active servo-assisted controlled suspension system that enables the wheels of the truck to have at least a degree of automatic height adjustment. Thus, when a truck confronts a bump or a hollow the ride height of the wheel is adjusted to compensate for that irregularity thereby ensuring that the vehicle remains level so that the mast remains vertical to its horizontal axis. Typically, by adjusting one or more of the wheels, the irregularity of the surface of the floor is compensated for and the mast remains vertical in both axes.

Other preferred features will be evident from the accompanying subsidiary claims.

### BRIEF DESCRIPTION OF THE DRAWINGS

Embodiments of the present invention will now be described by way of example, with reference to the accompanying figures in which;
Figure 1A is a diagram, in notional side elevation, of the principal component parts of a typical fork truck according to the prior art;
Figure 1B is a plan elevation of the truck shown in Figure 1A;
Figure 2 shows, greatly simplified, the structural wheel layout of a typical fork truck according to a first embodiment of the present invention;
Figure 3 shows a cross-section of a front wheel converted to provide an active suspension system according to the first embodiment shown in Figure 2;
Figure 4A depicts a side view of a front wheel of a second embodiment of the present invention;
Figure 4B shows a plan view of the truck part shown in Figure 4A;
Figure 5 shows a perspective view of suspension arrangement according to a third embodiment of the invention;
Figure 6 shows a horizontal section through the third embodiment;
Figure 7 shows a vertical section through the third embodiment;
Figure 8 shows a perspective view of suspension arrangement according to a fourth embodiment of the invention;
Figure 9 shows a horizontal section through the fourth embodiment; and
Figure 10 shows a vertical section through the fourth embodiment.

### DETAILED DESCRIPTION OF THE EMBODIMENTS

### Example 1

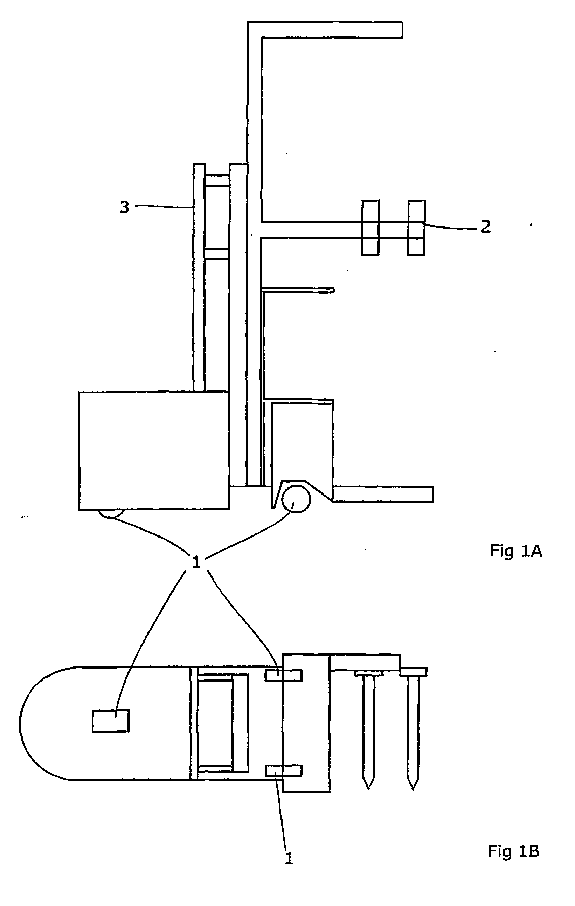

Referring to Figures 1A and 1B a typical known fork truck assembly is carried on wheels 1. The chassis is of solid construction, and the wheels are fitted without suspension. Forks 2 are elevated along with the fork mast 3 for the purpose of reaching extended heights.

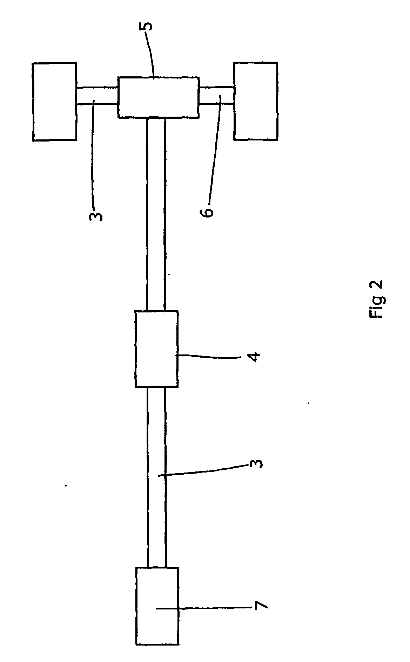

Figure 2 is a simplified plan of the chassis 3 of a fork truck according to one embodiment of the present invention. Sensors 4 are fixed to the chassis and allow the elevational difference between the front and back axles 6 and 7 to be evaluated. In addition, sensor 5 is fixed to the chassis axle 6 between the right wheel track and the left wheel track to allow the elevational difference between the front wheels 1 to be evaluated.

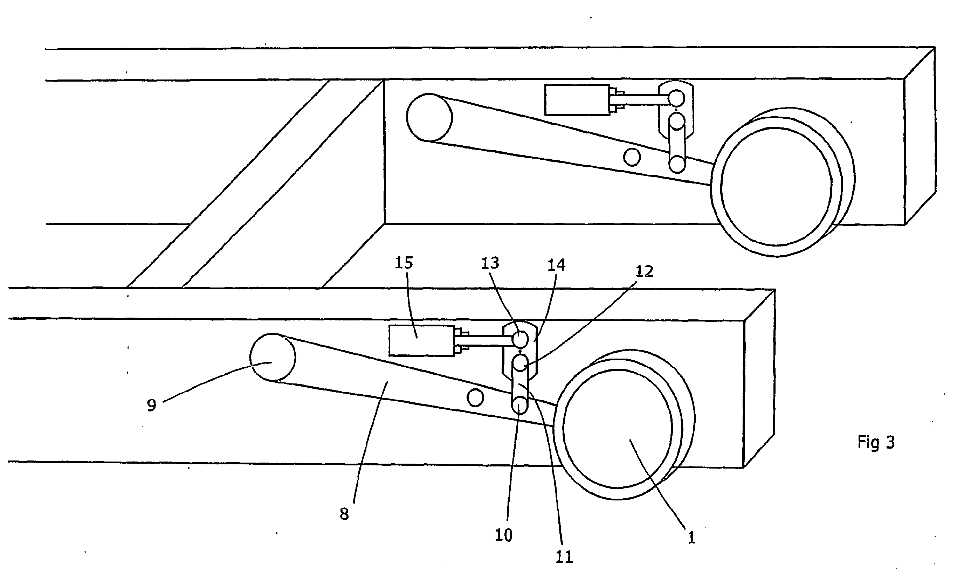

Figure 3 is a view of the arms carrying the front wheels of the fork truck. A front wheel 1 is carried on a suspension arm 8 fixed to the chassis of the vehicle with a pivot bearing 9 causing each of the front wheels 1 to be suspended. The suspended front wheels 1 are adjusted for height through a pivot bearing attached to the suspension arm 8 by means of an electric power unit and servovalves 15 connected to the suspension arms by means of a connecting rod 11 and pivot bearings 12/13. The electric drive unit is connected to the connecting rod 11 by means of a cranked bearing 14.

Thus, the height of the front wheels 1 can be adjusted within small tolerances by the electrically operated servovalves 15. The cranked bearing 14 allows movements of the servovalves 15 to be translated into small vertical movements of the wheel 1 and thus the wheel can be moved with considerable sensitivity.

The suspension system is fixed independently to each of the front wheels 1 of a fork truck, and is activated through a servo system by sensor 4 to control the elevational difference between the front 6 and the rear axle 7 and a sensor fixed to the front axle 5 to control the elevational difference between each of the front and wheel tracks.

Sensor 4 activates the suspension system on one of the front wheels 1 in order to control the elevation difference between the rear axle and the front wheel 1. At the same time sensor 5 activates the system on the other front wheel 1 thereby maintaining the correct elevation difference between the front wheels 1.

By controlling the elevation difference between the front and rear axles as well as that between the front wheel track, the system is designed to maintain the chassis of the fork truck in a level state, both when the vehicle is stationary and in motion. This can accommodate small undulations in the

### Example 2

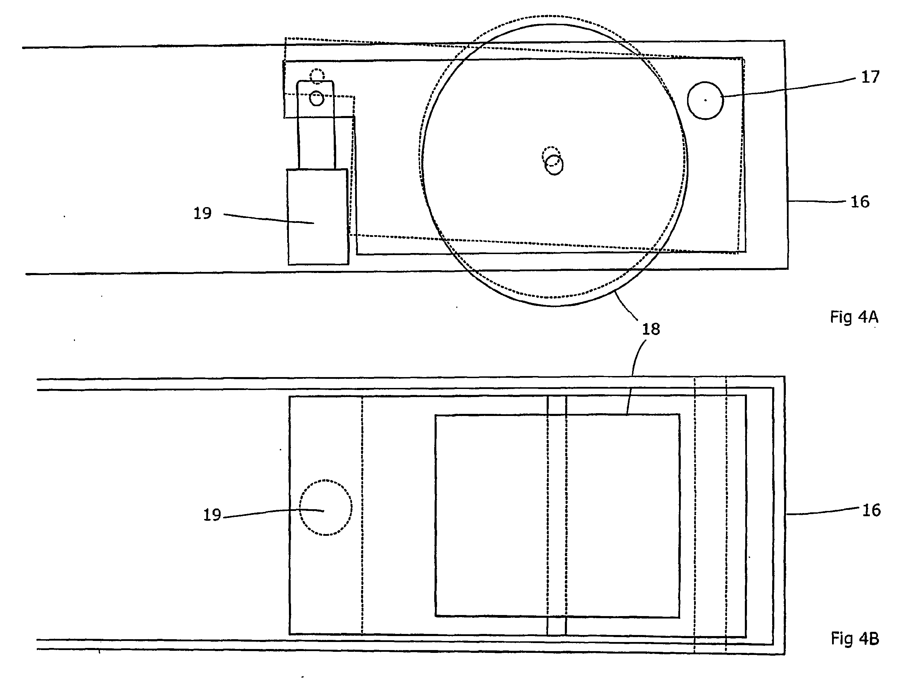

In an alternative embodiment illustrated in Figure 4A and 4B, the fork lift truck has a memory unit in which is stored data corresponding to the variance in the flatness of the surface of the path to be travelled. As the truck travels such a path, the truck is automatically jacked hydraulically to compensate for each variance in flatness by the passage of signals from the memory unit to hydraulic pistons that connect the truck's wheel units to the truck body. Thus, despite travelling a path having a surface with varying degrees of flatness or deviance from horizontal, the truck can safely and stably carry loads along such a path, for example down an aisle between shelving units.

In this embodiment, the truck has two special parts, namely, an electronic profiler that retains a record of surface irregularities, and an active suspension unit that is fitted so as to be operated via a suitable algorithm to compensate for the irregular surface as reflected by the data stored on the electronic profiler, which contain information regarding all the aisles. The data may be stored on removable data storage media such as flash cards. A tachometer specific to each aisle may be switched on and off at the beginning and end of each aisle automatically.

A simulator vehicle with an inclinometer and associated measuring electronics on board is used to generate the data for storage on the flash cards. These can then be removed from the simulator and inserted into an appropriate socket on the fork truck.

The fork truck and the simulator can determine their position via a range of methods. GPS units allow position determination, although the units presently available for non-military use may be insufficiently accurate. Visible or otherwise detectable markers could be distributed around the warehouse, for example in or above the aisles, or on the ceiling, and suitable optical or other detectors on the truck/simulator could detect them or receive signals from them. The rotation of the wheels could also be monitored to detect the distance the truck has moved; by monitoring wheels on both sides of the truck turns could also be detected. Of course, a combination of these methods could be employed.

In Figures 4A and 4B is shown a fixed main frame 16 of a fork lift truck with an alternative suspension. The front wheel 18 is mounted on a subframe 19 which can be pivoted about a bolt 17. The position of the subframe 19 relative to the chassis is controlled by a hydraulic piston 20 activated in dependence on the local elevation of the surface. It will be appreciated that this suspension arrangement could be used in conjunction with the first example, and that (likewise) the suspension arrangement of the first example could be used in conjunction with this example.

In the above examples, the vertical height of the wheels has been adjusted in order to maintain the chassis of the truck in a level state.

Thus, in conclusion, the present invention provides a fork lift truck that is able to travel along undulating and irregular surfaces and dynamically respond to such unevenness, whilst maintaining verticality of its mast. This avoids warehouse floors having to be expensively ground into an even state, which is time consuming.

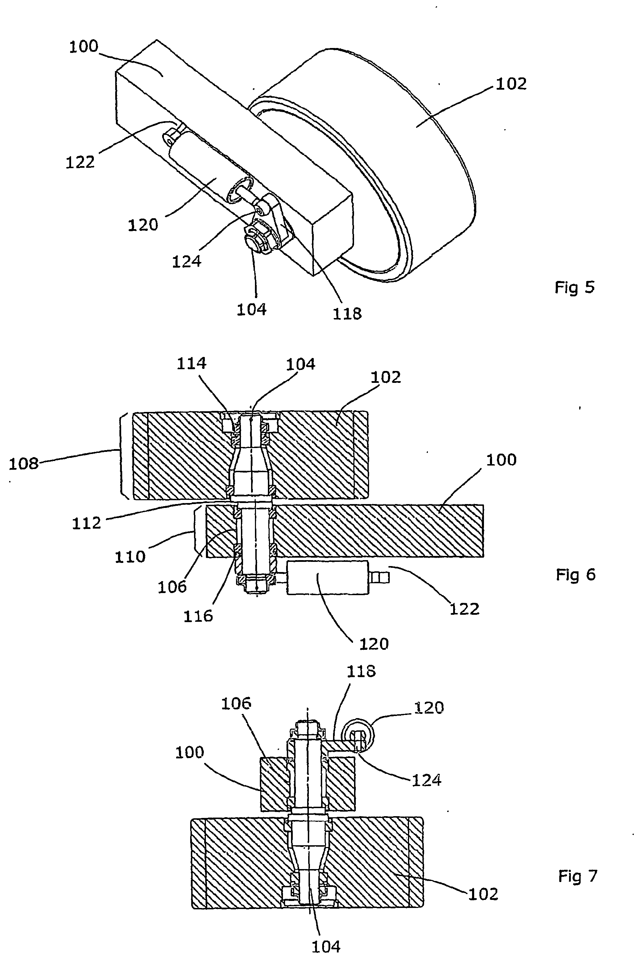

Referring to Figures 5, 6 and 7, a third embodiment is shown in which a suspension arrangement suitable for use in the suspension systems described above is shown. An arm 100 forming part of the chassis of the fork truck is shown, and a wheel 102 is shown adjacent the arm, mounted on an axle 104 which passes through the centre of the wheel 102 and through a suitable bore 106 on the arm 100.

The axle 104 is non-straight. A generally straight first section 108 is linked to a generally straight second section 110 via a crank 112. Thus, the axes of sections 108 110 are parallel but slightly displaced. This displacement should be of the same order of magnitude albeit slightly greater than the expected variation in the floor height, such as between 1 and 10mm. 5mm is a suitable value, in practice.

The wheel 102 is able to rotate around its portion 108 of the axle 104 using suitable ball races 114 etc. Likewise, the section 110 of the axle 104 within the chassis arm 100 is able to rotate within the bore 106 using a second set of suitable bore races etc. 116. As a result, two independent forms of movement of the wheel 102 are achieved. As the wheel 102 rotates around the axle 104, the vehicle is able to move forward. As the axle 104 rotates within the bore 106 of the arm 100, the wheel 102 describes a circular motion, and thus its height varies sinusoidally.

To employ this arrangement in the present invention, a fixed arm extends transversely from the axle 104 on the inside of the arm 100. The arm is fixed firmly to the axle 104 and thus movement of the lever 118 causes rotation of the axle 104 within the arm 100 and adjusts the height of the wheel 102 accordingly. A hydraulically controlled piston 120 is fixed at one end to the arm 100 at 122 and at the other end is connected to the lever via a suitable rotatable pin 124. Thus, as the hydraulic cylinder 120 is actuated, the end of the lever 118 is moved and will describe a circular arc around the relevant section 110 of the axle 104, causing the axle 104 to rotate in its bore 106 in the arm 100 and raise or lower the centre of the wheel 102. The hydraulic cylinder 120 therefore effectively provides a very fine control over the height of the wheel 102 and allows the wheel 102 to be adjusted so as to compensate for variations in the surface over it is being driven.

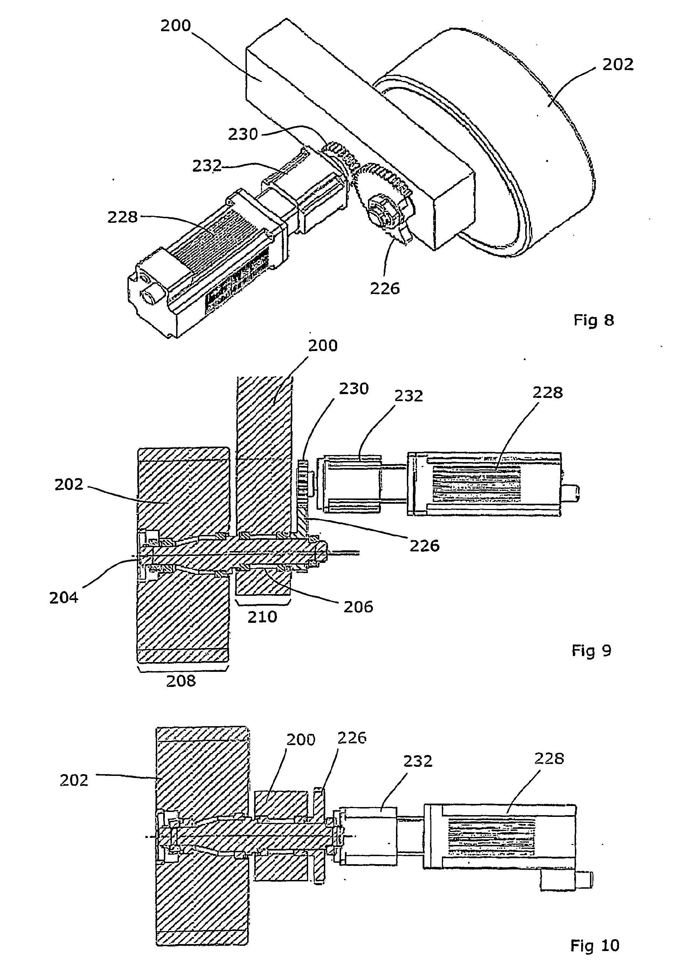

A fourth embodiment will now be described in respect of Figures 8, 9 and 10. Many components are shared with the third embodiment shown in Figures 5, 6 and 7 and are therefore denoted with corresponding reference numerals. Thus, an arm 200 forming part of the chassis of a fork truck carries a wheel 202. The wheel 202 is supported on a cranked axle 204 which is seated in a bore 206 in the arm 200. The axle 204, as before, has a first straight section 208 within the wheel 202 and a second straight section 210 within the arm 200, but these are joined via a crank section 212 and the axes of the sections 208 and 210 are thus parallel but displaced by a small distance of between 1 and 10mm.

In this embodiment, the axle section 206 journalled in the arm 200 is provided with an externally accessible cog wheel 226. In practice, this can be a complete cog extending 360° around the axle 104, or it can be a partial cog having only the external section required (as shown in Figure 8).

An electric motor 228 is provided, on the ultimate output shaft of which is mounted a pinion 230 which meshes with the cog 226. Thus, as the motor 228 is activated, the pinion 230 drives the cog 226 and rotates the axle 204 in its bore 206 in the arm 200. This then adjusts the height of the wheel 202. As shown in Figures 8, 9 and 10, the combination of the cog and the pinion provides a suitable downward gearing of the output of the motor 228 to allow sufficient sensitivity in the vertical adjustment of the position of the wheel 202. If desired, and as shown in Figures 8, 9 and 10, there may be a gearbox 232 interposed between the motor 228 and the pinion 230 to provide further downward gearing and greater sensitivity. The gearbox 232 can of course incorporate the pinion 230 and cog 226 or replace them.

It will of course be understood that many variations may be made to the above-described embodiment without departing from the scope of the present invention.

## Claims

1. A fork lift truck for moving a load, comprising a load bearing member (2,3) for carrying the load, wherein the truck comprises means (15,20,120,228) for adjusting the vertical axis of the load bearing member to maintain it substantially parallel to the axis of gravitational pull on the load, by controlling both the tilt of the fork truck between the wheel track and the elevational difference between the front (6) and rear axle (7), when the truck travels along a surface having varying degrees of flatness or deviance from horizontal.

2. A fork lift truck as claimed in claim 1, wherein the load bearing member comprises a wheel-bearing chassis (3) of the truck.

3. A fork lift truck according to claim 1 in which the load bearing member comprises a wheel ssembly (1,102,202).

4. A fork lift truck as claimed in either claim 1 or claim 2, comprising one or more sensors (4,5) for sensing elevational differences between the wheels of the truck and one or more control means (15,20,120,228) for receiving signals from the sensor(s) and for automatically adjusting the vertical axis of the load bearing member according to the sensed elevational differences.

5. A fork lift truck as claimed in claim 4, wherein the control means comprises an active servo-assisted suspension system (8) for enabling a wheel of the truck to have automatic height adjustment.

6. A fork lift truck as claimed in claim 4, wherein the control means comprises a hydraulically assisted suspension system (8) for enabling a wheel of the truck to have automatic height adjustment.

7. A fork lift truck as claimed in either claim 5 or claim 6, wherein a plurality of wheels (1,102,202) of the truck have independent height adjustment capability.

8. A fork lift truck as claimed in any preceding claim, wherein an active suspension of the wheel bearing chassis (3) of the truck is supplemented by a memory unit in which is pre stored data corresponding to variance in flatness of the surface to be travelled, signals from said memory unit adjusting each wheel's height in use in accordance with the stored variance.

9. A fork lift truck as claimed in claim 8, wherein the data is stored initially on a removable data storage means insertable into the memory unit.

10. A fork lift truck according to any one of the preceding claims in which the load bearing member is mounted on a non-straight axle (104,204) and the vertical position of the load-bearing member is adjusted by rotation of the axle.

11. A fork lift truck according to claim 10 in which the axle has a first straight section (108,208) on which the load bearing member is held and a second straight section (110,210) held on a chassis part of the truck, the two straight sections having axes that are parallel but offset.

12. A fork lift truck according to claim 11 in which the offset is between 1 and 10 mm.

13. A fork lift truck according to any one of claims 10 to 12 in which the axle has a transversely projecting lever (118), thereby to assist rotation of the axle.

14. A fork lift truck according to any one of claims 10 to 12 in which a toothed wheel (226) is mounted on the axle, thereby to assist rotation thereof.

## Patentansprüche

1. Gabelstapler zum Bewegen einer Last, der ein tragendes Element (2, 3) für das Transportieren der Last umfasst, wobei der Gabelstapler Mittel (15, 20, 120, 228) umfasst, die die senkrechte Achse des tragenden Elements so einstellen, dass diese im Wesentlichen parallel zur Achse der auf die Last wirkenden Gravitationskraft bleibt, indem sowohl die Neigung des Gabelstaplers zwischen der Radspur als auch der Höhenunterschied zwischen Vorder- (6) und Hinterachse (7) gesteuert wird, wenn er sich auf einer Oberfläche mit unterschiedlichem Flachheitsgrad oder unterschiedlicher Abweichung von der Horizontalen entlang bewegt.

2. Gabelstapler nach Anspruch 1, bei dem das tragende Element ein radtragendes Fahrgestell (3) des Gabelstaplers umfasst.

3. Gabelstapler nach Anspruch 1, bei dem das tragende Element eine Radbaugruppe (1, 102, 202) umfasst.

4. Gabelstapler nach Anspruch 1 oder 2, der einen oder mehrere Sensoren (4, 5) umfasst, die Höhenunterschiede zwischen den Rädern des Gabelstaplers erfassen, und ein oder mehrere Steuermittel (15, 20, 120, 228), die Signale von dem Sensor beziehungsweise den Sensoren empfangen und die senkrechte Achse des tragenden Elements den erfassten Höhenunterschieden entsprechend automatisch einstellen.

5. Gabelstapler nach Anspruch 4, bei dem das Steuermittel einen aktiven Servo-Aufhängungsmechanismus (8) umfasst, wodurch die Höhe eines Rades des Gabelstaplers automatisch eingestellt werden kann.

6. Gablerstapler nach Anspruch 4, bei dem das Steuermittel einen hydraulischen Servo-Aufhängungsmechanismus (8) umfasst, wodurch die Höhe eines Rades des Gabelstaplers automatisch eingestellt werden kann.

7. Gabelstapler nach Anspruch 5 oder Anspruch 6, bei dem die Höhe mehrerer Räder (1, 102, 202) des Gabelstaplers einzeln eingestellt werden kann.

8. Gabelstapler nach einem der vorhergehenden Ansprüche, bei dem eine aktive Aufhängung des radtragenden Fahrgestells (3) des Gabelstaplers durch eine Speichereinheit ergänzt wird, in der im Voraus Daten gespeichert werden, die den Unterschieden bei der Flachheit der zu befahrenden Oberfläche entsprechen, wobei Signale aus der Speichereinheit bei der Benutzung die Höhe jedes Rades dem gespeicherten Unterschied entsprechend einstellen.

9. Gabelstapler nach Anspruch 8, bei dem die Daten zunächst auf einem wechselbaren Datenspeichermittel gespeichert werden, das in die Speichereinheit eingesteckt werden kann.

10. Gabelstapler nach einem der vorhergehenden Ansprüche, bei dem das tragende Element an einer ungeraden Achse (104, 204) angebracht ist und die senkrechte Lage des tragenden Elements durch Drehen der Achse eingestellt wird.

11. Gabelstapler nach Anspruch 10, bei dem die Achse einen ersten geraden Abschnitt (108, 208) aufweist, an dem das tragende Element gehalten wird, und einen zweiten geraden Abschnitt (110, 210), der an einem Fahrgestellteil des Gabelstaplers gehalten wird, wobei die beiden geraden Abschnitte Achsen aufweisen, die zwar zueinander parallel, aber versetzt sind.

12. Gabelstapler nach Anspruch 11, bei dem der Versatz zwischen 1 und 10 mm beträgt.

13. Gabelstapler nach einem der Ansprüche 10 bis 12, bei dem die Achse einen quer vorstehenden Hebel (118) aufweist, wodurch die Drehung der Achse unterstützt wird.

14. Gabelstapler nach einem der Ansprüche 10 bis 12, bei dem ein Zahnrad (226) an der Achse angebracht ist, wodurch deren Drehung unterstützt wird.

## Revendications

1. Chariot élévateur à fourche pour déplacer une charge, comprenant un élément porteur de charge (2, 3) pour porter la charge, lequel chariot comprend des moyens (15, 20, 120, 228) pour régler l'axe vertical de l'élément porteur de charge afin de le maintenir sensiblement parallèle à l'axe d'attraction gravitationnelle exercée sur la charge, en commandant à la fois l'inclinaison du chariot à fourche à l'intérieur de la voie et la différence d'élévation entre l'essieu avant (6) et l'essieu arrière (7), lorsque le chariot se déplace sur une surface ayant des degrés variables de planéité ou d'écart par rapport à l'horizontale.

2. Chariot élévateur à fourche selon la revendication 1, dans lequel l'élément porteur de charge comprend un châssis (3) portant les roues du chariot.

3. Chariot élévateur à fourche selon la revendication 1, dans lequel l'élément porteur de charge comprend un ensemble de roue (1, 102, 202).

4. Chariot élévateur à fourche selon la revendications 1 ou 2, comprenant un ou plusieurs capteurs (4, 5) pour détecter les différences d'élévation entre les roues du chariot et un ou plusieurs moyens de commande (15, 20, 120, 228) pour recevoir les signaux du ou des capteurs et pour ajuster automatiquement l'axe vertical de l'élément porteur de charge en fonction des différences d'élévation détectées.

5. Chariot élévateur à fourche selon la revendication 4, dans lequel le moyen de commande comprend un système de suspension servo-assisté actif (8) pour permettre le réglage de hauteur automatique d'une roue du chariot.

6. Chariot élévateur à fourche selon la revendication 4, dans lequel le moyen de commande comprend un système de suspension à assistance hydraulique (8) pour permettre le réglage de hauteur automatique d'une roue du chariot.

7. Chariot élévateur à fourche selon la revendication 5 ou 6, dans lequel une pluralité de roues (1, 102, 202) du chariot ont une capacité de réglage de hauteur indépendante.

8. Chariot élévateur à fourche selon l'une quelconque des revendications précédentes, dans lequel une suspension active du châssis porteur de roues (2) du chariot est complétée par une unité de mémoire dans laquelle sont pré-enregistrées des données correspondant aux écarts de planéité de la surface à parcourir, les signaux provenant de ladite unité de mémoire ajustant la hauteur de chaque roue en cours d'utilisation en fonction des écarts enregistrés.

9. Chariot élévateur à fourche selon la revendication 8, dans lequel les données sont enregistrées initialement sur un moyen d'enregistrement de données amovible pouvant être inséré dans l'unité de mémoire.

10. Chariot élévateur à fourche selon l'une quelconque des revendications précédentes, dans lequel l'élément porteur de charge est monté sur un essieu non droit (104, 204) et la position verticale de l'élément porteur de charge est ajustée par rotation de l'essieu.

11. Chariot élévateur à fourche selon la revendication 10, dans lequel l'essieu a une première section droite (108, 208) sur laquelle est maintenu l'élément porteur de charge, et une deuxième section droite (110, 210) maintenue sur une partie châssis du chariot, les deux sections droites ayant des axes qui sont parallèles mais décalés.

12. Chariot élévateur à fourche selon la revendication 11, dans lequel le décalage est compris entre 1 et 10 mm.

13. Chariot élévateur à fourche selon l'une quelconque des revendications 10 à 12, dans lequel l'essieu a un levier dépassant transversalement (118) pour faciliter ainsi la rotation de l'essieu.

14. Chariot élévateur à fourche selon l'une quelconque des revendications 10 à 12, dans lequel une roue dentée (226) est montée sur l'essieu pour faciliter ainsi la rotation de celui-ci.
